# EUROPEAN PATENT SPECIFICATION

(11) **EP 2 628 711 B1**
(45) Date of publication and mention of the grant of the patent: **27.09.2017**
(21) Application number: 12156214.4
(22) Date of filing: 20.02.2012
(51) Int. Cl.: C02F 1/66, C02F 11/14, C02F 1/20, C02F 1/52, C02F 1/56, C02F 11/18

(54) **METHOD OF TREATMENT OF A SLURRY COMPRISING DIGESTED ORGANIC MATERIAL**
VERFAHREN ZUR BEHANDLUNG EINES SCHLAMMS ENTHALTEND VERFAULTES ORGANISCHES MATERIAL
PROCÉDÉ POUR LE TRAITEMENT D'UNE BOUE COMPRENANT DE LA MATIÈRE ORGANIQUE DIGÉRÉE

(43) Date of publication of application: 21.08.2013
(73) Proprietor: Kemira Oyj, 00180 Helsinki (FI)
(72) Inventor: Grönfors, Outi, 02270 Espoo (FI)
(74) Representative: Awapatent AB

(56) References cited:
- WO-A1-2004/094320
- US-A- 4 724 084

## Description

### Field of the art

The present invention relates to treatment of a slurry comprising anaerobically digested organic matter from a biogas plant.

### Backgound

Dewatering of digested material at biogas plants may be difficult. Often the amount of suspended solids remain high in the reject water after mechanical dewatering. These solids may cause problems in a subsequent ammonia stripping process that typically is run at a pH above 10 for nitrogen removal purposes or if reject is recycled back to the process. At the moment municipal waste water treatment plants are facing problems treating the reject waters from biogas plants. In many of the biogas plants used today the reject water contains 4 to 10 times as much suspended solids in the reject water at alkaline pH as the subsequent ammonia stripper is adapted for in its design.

WO2004/094320 discloses a method of treating digested sludge with improved dewatering and hygienization. The method discloses the use of acid, iron salt, and oxidizing agent followed by dewatering under acidic conditions.

US2005/0077245 discloses a method for stabilizing and conditioning wastewater sludge. The method discloses the use of acid, oxidizing agents and flocculant followed by dewatering under acidic conditions.

WO2010/108558 discloses a method for producing biogas by anaerobic digestion of organic matter. In the document it is disclosed that hydrogen peroxide may be used to hygenisate the digested sludge produced and also reduce the amount of water in the hygenisated sludge after dewatering.

There is a need for alternative and improved separation of solid and liquid compounds of treated digested organic material.

### Summary of the present invention

A reduction of the content of suspended solids in the reject water is important for a biogas plant since it may affect the subsequent processes and the waste treatment costs at the municipal wastewater treatment plant.

The present invention relates to a method that precipitates the solids at alkaline process conditions and in an efficient way removes the existing suspended solids. This is achieved by an adjustment of an acidic slurry mixture treated with an oxidizing agent to an alkaline pH before an addition of a flocculating polymer to the process. The suspended solids are then precipitating at a pH of 8 and above. As the polymer is added to the slurry mixture after the adjustment of pH toy 8, the polymer flocculates the suspended solids and the formed precipitated solids are then removed by fractioning of solids from liquid. After dewatering, this results in a liquid fraction in which the suspended solids remain on low level even as the pH is further increased above 10 before or during a subsequent ammonia stripping process. The reject water exhibits a low content of suspended solids, and the increase of the pH above 10 does not cause problematic subsequent precipitation.

The present method is advantageous because low amounts of suspended solids are required for the reject water subjected to a subsequent ammonia removal by stripping. The present method also provides an improved reduction in COD and a total amount of phosphorous.

The present method relates to treatment of a slurry comprising anaerobically digested organic material, wherein the anaerobically digested organic material is the digestate from a biogas plant, which comprises the steps of:
a) obtaining an acidic slurry at a pH of below 7 by addition of an acidic material to the slurry comprising anaerobically digested organic material, if the slurry comprising anaerobically digested organic material is not already at a pH below 7, so that an acidic slurry at a pH below 7 is obtained,
b) adding an oxidizing agent to the acidic slurry and allowing to react,
c) adding an alkaline compound to the slurry obtained in b) to obtain ap H≥8,
d) adding a flocculating polymer to the slurry obtained in c), and
e) separating the slurry obtained in d) into a liquid and solid phase,
wherein the liquid phase obtained after step e) is subjected to a further increase of the pH above 10 before or during an ammonia stripping process.

### Detailed description of the exemplary embodiments

The present method decreases the amount of suspended solids in the filtrate at alkaline conditions and prevents unwanted precipitation in further processing at an increased pH. The anaerobically digested organic material is the digestate from a biogas plant.

In the present method the slurry is adjusted to a pH below 7, if it not already is at such a pH. The pH of the slurry may be adjusted to be in a range of 1-6.5, or 2-6.5, or 4-6. The adjustment of the pH may be done with at least one acidic material, which may be selected from inorganic or organic acids or acidic metal salts thereof, or a combination thereof. Examples of inorganic acids are sulphuric acid, hydrochloric acid and nitric acid, which also may be used as metal salts or in any combination. Examples of organic acids are formic acid and oxalic acid which also may be used as metal salts or in combination. Examples of acidic metal salts are iron salts.

The addition of the acidic material is made to lower the pH of the slurry. The slurry may be kept in this state before further processing. The acidic slurry may stay acidic for a time period of minutes to several days before any further processing of the slurry. As examples the acidic slurry may be kept for 24h or 48h before the slurry is processed further or the slurry may be kept for a time period of between 1 minute and 2h.

The acidic slurry is brought in contact with an oxidizing agent. The oxidizing agent may be hydrogen peroxide, sodium percarbonate, peracid or potassium permanganate, or a combination thereof. Examples of peracids are peracetic acid and performic acid, which may be used by themselves or in combination. The amount of the oxidizing agent is typically 3-50 kg/ton dry solids. In one embodiment the amount of hydrogen peroxide is 5-30 kg/ton dry solids. The temperature of the slurry during the reaction with the oxidizing agent is in the range of 10-80°C, or 20-75°C. When the oxidizing agent has been added to the slurry it is allowed to react. A reaction may proceed for a time period of minutes to several days, e.g. 24-72h, 1-24h or 1 minute to 1 hour.

Thereafter, the pH of the slurry reacted with oxidizing agent is increased by the addition of an alkaline compound. Suitable alkaline compounds are for example sodium hydroxide, potassium hydroxide and calcium oxide/hydroxide. The pH is in this step raised to a value above or equal to 8, e.g. 8-13, 8.5-12, 8.5-11, or 9-10.

After the slurry has been adjusted to be within an alkaline range, the slurry is brought in contact with a flocculating polymer. Suitable flocculating polymers may be cationic, nonionic or anionic polymers. Cationic polymers are preferred. Examples of flocculation polymers are starch derivatives, polysaccharides, polyethyleneimines and polyacrylamides. In one embodiment the flocculating polymer is cationic polyacrylamide. The molecular weight of the cationic polyacrylamide is preferably from at least about 500,000, with a range of preferably about 2,000,000 to 15,000,000. The degree of cationic substitution for the cationic polyacrylamide is preferably at least about 1 mol%, with a range of preferably about 5 to 50 mol%. The flocculating polymer assists in a subsequent separation step. Inorganic coagulants like polyaluminum chloride or ferric sulfate may be used with combination of polymeric flocculants. Also, the use of flocculation aids like bentonite is possible.

After the flocculating polymer has been added to and mixed with the alkaline mixture, a separation step is performed, which separates material into a liquid and a solid phase. Such a separation may be performed by any suitable means like by decantation, centrifugation, or filtration.

The filtrate obtained after the separation step then proceeds with further process steps under alkaline conditions, at even a higher pH, without further precipitation or only low amounts of suspended solids appearing due to the increased pH. Reject waters from a biogas plant are processed according to the above mentioned method steps, and then there is no precipitation of a large amount of suspended solids resulting from the pH increase above 10 performed during or before entry into the ammonia stripper.

### Example

An digestate sample (dry solids content 3.87% by weight) of 2.0 kg was taken from a biogas process after a thermal hygienization. The pH of the sample was reduced from the original pH of 7.7 to pH 5 by using H₂SO₄ (95-97% by weight). Defoamer Fennodefo 330 (Kemira Oyj) was used to control the foam during the addition of the acid. The obtained slurry was mixed for 10 min, after which 3.33 ml of H₂O₂ (50% by weight) was added. The pH then dropped to 4.9. Then the sample was further treated as follows:

### Comparative treatment process:

A sample of 250 ml from the above mentioned treated digestate sample was taken and put into a jar. Then 37.5 ml of a 0.1 weight% solution of cationic high molecular weight polymer (Superfloc C494HMW, Kemira Oyj) was added to and mixed with the slurry. The obtained flocculated slurry was filtered through a 52/32 mesh screen for water separation. The turbidity of the obtained filtrate was measured and it was 33 FTU. The pH of the filtrate was then increased to pH 10.82 by using a 50 weight% NaOH solution. Precipitation started to form at pH 7.84. The measured turbidity at pH 10.82 was >1000 FTU.

### Treatment process 1:

A sample of 250 ml from the above mentioned treated digestate sample was taken and put into a jar. The pH was adjusted to 8.07 by using a 50 weight% NaOH solution before addition of a polymer. Then 38.5 ml of a 0.1 weight% solution of cationic high molecular weight polymer (Superfloc C494HMW, Kemira Oyj) was added and mixed with the slurry. The obtained flocculated slurry was filtered through a 52/32 mesh screen for water separation. The turbidity of the obtained filtrate was measured and it was 64 FTU. The pH of the filtrate was then increased to pH 10.5 by using 50 weight% NaOH solution. No precipitation was observed and the measured turbidity was 71 FTU.

### Treatment process 2:

A sample of 250 ml from the above mentioned treated digestate sample was taken and put into a jar. The pH was adjusted to 9.5 by using a 50 weight% NaOH solution before addition of a polymer. Then 38.5 ml of a 0.1 weight% solution of cationic high molecular weight polymer (Superfloc C494HMW, Kemira Oyj) was added and mixed with the slurry. The obtained flocculated slurry was filtered through a 52/32 mesh screen for water separation. The turbidity of the obtained filtrate was measured and it was 42 FTU. The pH of the filtrate was then increased to pH 10.5 by using 50 weight% NaOH solution. No precipitation was observed.

From the above example it is apparent that treatment process 1 and 2 according to the present method clearly limits an unwanted precipitation after a further increase of the pH to 10.5 in comparison with the comparative treatment process. An increased pH before addition of a polymer results in a lower final turbidity value as can be seen from the comparative example of >1000 FTU and the treatment process 1 of 71 FTU. The further increase of the pH in the filtrate are done to imitate the conditions in e.g. an ammonia stripper. The use of an increased pH before the polymer addition results in no precipitation after an increase of the pH of the filtrate obtained after the filtration step. The turbidity values for treatment process 1 only increased from 64 to 71 FTU after the further addition of NaOH, while for the comparative treatment process the values went from 33 to >1000 FTU.

## Claims

1. A method of treating a slurry comprising anaerobically digested organic material, wherein the anaerobically digested organic material is the digestate from a biogas plant, which comprises the steps of:
a) obtaining an acidic slurry at a pH of below 7 by addition of an acidic material to the slurry comprising anaerobically digested organic material, if the slurry comprising anaerobically digested organic material is not already at a pH below 7, so that an acidic slurry at a pH below 7 is obtained,
b) adding an oxidizing agent to the acidic slurry and allowing to react,
c) adding an alkaline compound to the slurry obtained in b) to obtain a pH ≥ 8,
d) adding a flocculating polymer to the slurry obtained in c), and
e) separating the slurry obtained in d) into a liquid and solid phase, wherein the liquid phase obtained after step e) is subjected to a further increase of the pH above 10 before or during a subsequent ammonia stripping process.

2. The method according to claim 1, wherein the acidic slurry is obtained by addition of an acid selected from an inorganic acid, preferably sulphuric acid, hydrochloric acid or nitric acid, or a metal salt thereof, or a combination thereof.

3. The method according to claim 1, wherein the acidic slurry is obtained by addition of an acid selected from an organic acid, preferably formic acid or oxalic acid, or a metal salt thereof, or a combination thereof.

4. The method according to anyone of claims 1-3, wherein the pH of the acidic slurry in step a) is 1-6.5, preferably 2-6.5, preferably 4-6.

5. The method according to anyone of claims 1-4, wherein the oxidizing agent is hydrogen peroxide, sodium percarbonate, peracid or potassium permanganate.

6. The method according to claim 5, wherein the peracid is peracetic acid or performic acid, or a combination thereof.

7. The method according to anyone of claims 1-6, wherein the acidic slurry is treated with the oxidizing agent at a temperature of 10-80°C, preferably 20-75 °C.

8. The method according to anyone of claims 1-7, wherein the obtained pH of step c) is 8-13, preferably 8.5-12, preferably 8.5-11, preferably 9-10.

9. The method according to anyone of claims 1-8, wherein step e) is performed by decantation, centrifugation, filtration; preferably centrifugation or filtration.

## Patentansprüche

1. Verfahren zum Behandeln einer Aufschlämmung, die anaerob vergärtes organisches Material umfasst, wobei das anaerob vergärte organische Material der Gärrückstand aus einer Biogasanlage ist, das die folgenden Schritte umfasst:
a) Erhalten einer sauren Aufschlämmung mit einem pH-Wert unter 7 durch Hinzufügen eines sauren Materials zu der anaerob vergärtes organisches Material umfassenden Aufschlämmung, wenn die anaerob vergärtes organisches Material umfassende Aufschlämmung nicht bereits bei einem pH-Wert unter 7 ist, so dass eine saure Aufschlämmung mit einem pH-Wert unter 7 erhalten wird,
b) Hinzufügen eines Oxidationsmittels zu der sauren Aufschlämmung und Ermöglichen einer Reaktion,
c) Hinzufügen einer alkalischen Verbindung zu der unter b) erhaltenen Aufschlämmung, um einen pH-Wert ≥ 8 zu erhalten,
d) Hinzufügen eines ausflockenden Polymers zu der unter c) erhaltenen Aufschlämmung und
e) Trennen der unter d) erhaltenen Aufschlämmung in eine flüssige und eine feste Phase, wobei die nach Schritt e) erhaltene flüssige Phase einer weiteren Erhöhung des pH-Wertes auf oberhalb von 10 vor oder während eines anschließenden Ammoniak-Strippverfahrens unterzogen wird.

2. Verfahren nach Anspruch 1, wobei die saure Aufschlämmung durch Hinzufügen einer Säure erhalten wird, die aus einer anorganischen Säure, vorzugsweise Schwefelsäure, Salzsäure oder Salpetersäure, oder einem Metallsalz davon oder einer Kombination davon ausgewählt wird.

3. Verfahren nach Anspruch 1, wobei die saure Aufschlämmung durch Hinzufügen einer Säure erhalten wird, die aus einer organischen Säure, vorzugsweise Ameisensäure oder Oxalsäure, oder einem Metallsalz davon oder einer Kombination davon ausgewählt wird.

4. Verfahren nach einem der Ansprüche 1-3, wobei der pH-Wert der sauren Aufschlämmung in Schritt a) 1-6,5, vorzugsweise 2-6,5, vorzugsweise 4-6 beträgt.

5. Verfahren nach einem der Ansprüche 1-4, wobei das Oxidationsmittel Wasserstoffperoxid, Natriumpercarbonat, Persäure oder Kaliumpermanganat ist.

6. Verfahren nach Anspruch 5, wobei die Persäure Peressigsäure oder Perameisensäure oder eine Kombination davon ist.

7. Verfahren nach einem der Ansprüche 1-6, wobei die saure Aufschlämmung mit dem Oxidationsmittel bei einer Temperatur von 10-80°C, vorzugsweise 20-75°C behandelt wird.

8. Verfahren nach einem der Ansprüche 1-7, wobei der erhaltene pH-Wert von Schritt c) 8-13, vorzugsweise 8,5-12, vorzugsweise 8,5-11, vorzugsweise 9-10 beträgt.

9. Verfahren nach einem der Ansprüche 1-8, wobei Schritt e) durch Dekantierung, Zentrifugation, Filtration; vorzugsweise Zentrifugation oder Filtration durchgeführt wird.

## Revendications

1. Procédé de traitement d'une boue comprenant de la matière organique digérée en anaérobiose, dans lequel la matière organique digérée en anaérobiose est le digestat provenant d'une centrale de production de biogaz, qui comprend les étapes consistant à :
a) obtenir une boue acide à un pH au-dessous de 7 par ajout d'une matière acide à la boue comprenant de la matière organique digérée en anaérobiose, si la boue comprenant de la matière organique digérée en anaérobiose n'est pas déjà à un pH au-dessous de 7, pour qu'une boule acide à un pH au-dessous de 7 soit obtenue,
b) ajouter un agent oxydant à la boue acide et les laisser réagir,
c) ajouter un composé alcalin à la boue obtenue en b) pour obtenir un pH ≥ 8,
d) ajouter un polymère floculant à la boue obtenue en c) et
e) séparer la boue obtenue en d) en une phase liquide et une phase solide, la phase liquide obtenue après l'étape e) étant soumise à une augmentation supplémentaire du pH au-dessus de 10 avant ou pendant un processus de stripping de l'ammoniac subséquent.

2. Procédé selon la revendication 1, dans lequel la boue acide est obtenue par ajout d'un acide choisi entre un acide inorganique, de préférence l'acide sulfurique, l'acide chlorhydrique ou l'acide nitrique, ou un sel métallique de celui-ci, ou une association de ceux-ci.

3. Procédé selon la revendication 1, dans lequel la boue acide est obtenue par ajout d'un acide choisi entre un acide organique, de préférence l'acide formique ou l'acide oxalique, ou un sel métallique de celui-ci, ou une association de ceux-ci.

4. Procédé selon l'une quelconque des revendications 1-3, dans lequel le pH de la boue acide dans l'étape a) est de 1-6,5, de préférence de 2-6,5, de préférence de 4-6.

5. Procédé selon l'une quelconque des revendications 1-4, dans lequel l'agent oxydant est le peroxyde d'hydrogène, le percarbonate de sodium, un peracide ou le permanganate de potassium.

6. Procédé selon la revendication 5, dans lequel le peracide est l'acide peracétique ou l'acide performique ou une association de ceux-ci.

7. Procédé selon l'une quelconque des revendications 1-6, dans lequel la boue acide est traitée avec l'agent oxydant à une température de 10-80 °C, de préférence de 20-75 °C.

8. Procédé selon l'une quelconque des revendications 1-7, dans lequel le pH obtenu de l'étape c) est de 8-13, de préférence de 8,5-12, de préférence de 8,5-11, de préférence de 9-10.

9. Procédé selon l'une quelconque des revendications 1-8, dans lequel l'étape e) est effectuée par décantation, centrifugation, filtration ; de préférence centrifugation ou filtration.
